# FASCICULE DE BREVET EUROPEEN

(11) **EP 4 198 811 B1**
(45) Date de publication et mention de la délivrance du brevet: **05.11.2025**
(21) Numéro de dépôt: 22211544.6
(22) Date de dépôt: 06.12.2022
(51) Int. Cl.: G06K 7/10

(54) **DETECTION DE DISPOSITIF NFC**
NFC-VORRICHTUNGSDETEKTION
NFC DEVICE DETECTION

(30) Priorité: 14.12.2021 FR 2113489
(43) Date de publication de la demande: 21.06.2023
(73) Titulaire: STMicroelectronics (Rousset) SAS, 13790 Rousset (FR)
(72) Inventeur: CORDIER, Nicolas, 13080 Aix-en-Provence (FR); JAUNET, Guillaume, 06130 Grasse (FR)
(74) Mandataire: Cabinet Beaumont

(56) Documents cités:
- EP-A1- 3 681 103
- US-A1- 2021 150 882
- US-A1- 2021 328 625

## Description

### Domaine technique

La présente description concerne de façon générale les circuits électroniques et, plus particulièrement, les transpondeurs électromagnétiques ou étiquettes électroniques (tag, en anglais). La présente description s'applique en particulier aux dispositifs électroniques intégrant un circuit de communication en champ proche (Near-Field Communication - NFC, en anglais), plus communément appelés dispositifs NFC, et à la détection de la présence d'un tel dispositif dans le champ d'un autre dispositif.

### Technique antérieure

Les systèmes de communication à transpondeurs électromagnétiques sont de plus en plus fréquents, en particulier depuis le développement des technologies de communication en champ proche. Ces systèmes exploitent typiquement un champ électromagnétique radiofréquence généré par un dispositif NFC (terminal ou lecteur) pour détecter puis communiquer avec un autre dispositif NFC (carte) situé à portée.

La plupart du temps, les dispositifs NFC sont alimentés par batterie. Des périodes d'utilisation de leurs fonctions et circuits sont alors généralement entrecoupées de périodes de veille. Les périodes de veille permettent en particulier d'abaisser la consommation énergétique des dispositifs NFC. Un dispositif NFC doit alors être "réveillé" quand il détecte une étiquette électronique ou un autre dispositif à portée. On a cependant intérêt à faire en sorte que les dispositifs NFC restent en veille le plus longtemps possible.

Le document US 2021/0150882 décrit un dispositif de communication radiofréquence.

Le document EP 3 681 103 décrit un système de commande pour dispositif de communication radiofréquence.

Le document US 2021/0328625 décrit un procédé et un dispositif de détection de dispositif NFC.

### Résumé de l'invention

Un mode de réalisation réduit tout ou partie des inconvénients des techniques connues de détection de présence d'un dispositif électronique intégrant un circuit de communication en champ proche par un autre dispositif électronique émettant un champ électromagnétique, plus particulièrement pendant les périodes de veille.

Un mode de réalisation propose une solution tenant compte de variations de conditions environnementales.

L'invention est définie par la teneur des revendications annexées.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un exemple de système de communication en champ proche du type auquel s'appliquent, à titre d'exemple, des modes de réalisation et modes de mise en œuvre décrits ;
la figure 2 est un chronogramme illustrant un exemple de procédé de détection, par un dispositif en mode lecteur et en veille, d'un dispositif en mode carte ;
la figure 3 est un chronogramme illustrant un mode de mise en œuvre d'un procédé de détection, par un dispositif en mode lecteur et en veille, d'un dispositif en mode carte ;
la figure 4 représente un mode de réalisation d'un circuit de communication en champ proche ;
la figure 5 illustre, par des chronogrammes, un fonctionnement du circuit de la figure 4 ;
la figure 6 représente, de façon très schématique et sous forme de blocs, un mode de réalisation d'un procédé de validation d'une détection ;
la figure 7 illustre, par des chronogrammes, le fonctionnement du mode de réalisation de la figure 6 ;
la figure 8 représente, de façon très schématique et sous forme de blocs, un autre mode de réalisation d'un procédé de validation d'une détection ;
la figure 9 illustre, par des chronogrammes, un exemple de fonctionnement d'un procédé de détection sans validation ; et
la figure 10 illustre, par des chronogrammes un exemple de fonctionnement du procédé de détection avec validation.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la génération des signaux radiofréquence et leur interprétation n'ont pas été détaillées, les modes de réalisation et modes de mise en œuvre décrits étant compatibles avec les techniques usuelles de génération et d'interprétation de ces signaux.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

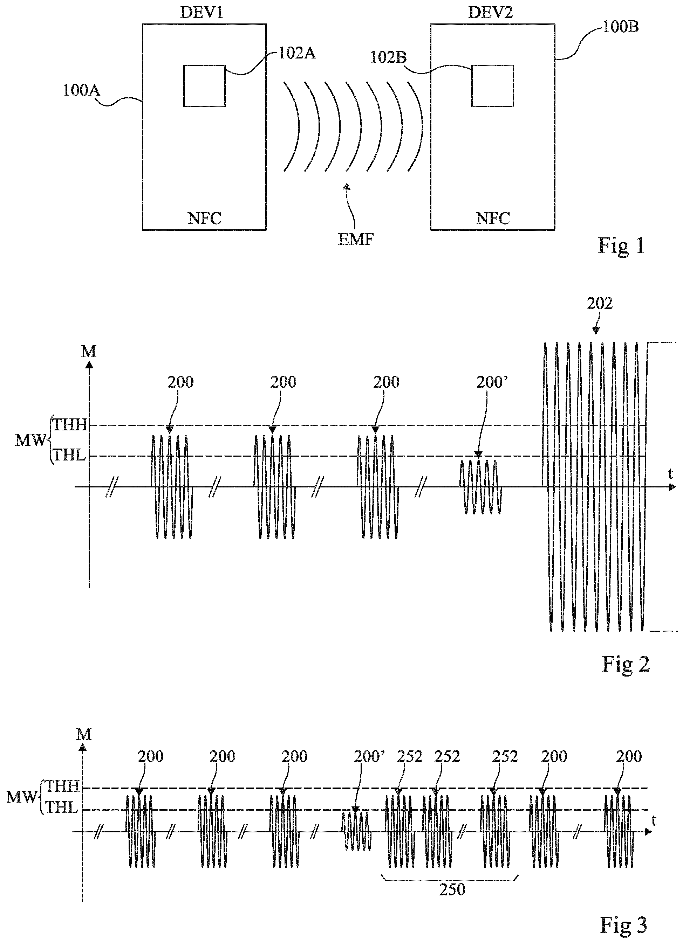

La figure 1 représente, de façon très schématique et sous forme de blocs, un exemple de système de communication en champ proche du type auquel s'appliquent, à titre d'exemple, des modes de réalisation et modes de mise en œuvre décrits.

On suppose arbitrairement le cas de deux dispositifs électroniques similaires, par exemple deux téléphones mobiles, mais ce qui est décrit s'applique plus généralement à tout système dans lequel un lecteur, borne ou terminal, rayonne un champ électromagnétique susceptible d'être capté par un transpondeur, qu'il s'agisse d'une étiquette électronique (TAG), d'une carte à microcircuit (IC Card), d'un dispositif plus évolué (un téléphone, par exemple), etc. Pour simplifier, on fera référence à des dispositifs NFC pour désigner des dispositifs électroniques intégrant un ou plusieurs circuits de communication en champ proche (Near-Field Communication - NFC, en anglais).

Dans l'exemple représenté, un premier dispositif NFC 100A (DEV1) est susceptible de communiquer, par couplage électromagnétique en champ proche, avec un deuxième dispositif NFC 100B (DEV2). Selon les applications, pour une communication, l'un des dispositifs NFC 100A, 100B fonctionne en mode dit lecteur tandis que l'autre dispositif NFC 100B, 100A fonctionne en mode dit carte, ou les deux dispositifs NFC 100A et 100B communiquent en mode dit poste à poste (Peer-to-Peer - P2P, en anglais).

Chaque dispositif NFC 100A, 100B intègre un circuit de communication en champ proche symbolisé, en figure 1, par un bloc 102A, 102B. Les circuits 102A et 102B de communication en champ proche comportent chacun divers éléments ou circuits électroniques de génération ou de détection d'un signal radiofréquence à l'aide d'une antenne (non représentée), par exemple des circuits de modulation ou de démodulation. Lors d'une communication entre les dispositifs NFC 100A et 100B, le signal radiofréquence généré par l'un des dispositifs NFC 100A, 100B est capté par l'autre dispositif NFC 100B, 100A se trouvant à portée.

En figure 1, on suppose arbitrairement que le premier dispositif NFC 100A émet un champ électromagnétique (EMF) capté par le deuxième dispositif NFC 100B à portée. Il se forme alors un couplage entre deux circuits oscillants, en l'espèce celui de l'antenne du premier dispositif NFC 100A et celui de l'antenne du deuxième dispositif NFC 100B. Ce couplage se traduit par une variation de la charge constituée par les circuits du dispositif NFC 100B sur le circuit oscillant de génération du champ EMF du dispositif NFC 100A.

En pratique, pour établir une communication, une variation de phase ou d'amplitude du champ émis est détectée par le dispositif 100A, qui entame alors un protocole de communication NFC avec le dispositif 100B. Côté dispositif NFC 100A, on détecte en pratique si l'amplitude de la tension aux bornes du circuit oscillant et/ou le déphasage par rapport au signal généré par le circuit 102A sortent de plages (ou fenêtres) d'amplitudes et/ou de phases délimitées chacune par des premier et deuxième seuils. Par exemple, le premier seuil est inférieur au deuxième seuil. On fera par la suite référence à des seuils inférieur et supérieur.

Une fois que le dispositif NFC 100A a détecté la présence du dispositif NFC 100B dans son champ, il entame une procédure d'établissement de communication mettant en œuvre des émissions de requêtes par le dispositif NFC 100A et de réponses par le dispositif NFC 100B (séquence d'interrogation telle que définie dans les spécifications techniques du NFC Forum). Les circuits du dispositif NFC 100B, s'ils étaient en mode veille, sont alors réactivés.

Lorsqu'un dispositif NFC n'est pas en cours de communication, il est commuté en mode dit basse consommation (low power, en anglais), ou mode veille, afin de réduire l'énergie consommée. Cela est en particulier le cas pour les dispositifs NFC alimentés par batteries. Dans le mode basse consommation, un dispositif NFC configuré en mode lecteur exécute un mode dit de détection de carte (Low Power Card Detection - LPCD, en anglais) également appelé de détection d'étiquette ou de tag (Low Power Tag Detection - LPTD, en anglais), dans lequel il effectue des boucles de détection d'un autre dispositif se trouvant dans son champ (à portée) afin de sortir d'un mode veille à des fins de communication.

La détection est analogue à celle opérée lorsque le dispositif n'est pas en mode basse consommation. Toutefois, en mode normal, l'émission de la porteuse (du champ) est continue et inclut périodiquement des trames d'interrogation tandis que, en mode veille, l'émission du champ s'effectue par salves (burst, en anglais) périodiques et sans trame d'interrogation afin de réduire la consommation. Les salves sont d'une durée nettement inférieure (dans un rapport d'au moins dix, de préférence d'au moins cent) à la durée d'une requête d'interrogation d'une carte en mode normal.

Pour simplifier la description qui suit, on considère ce qui se passe au niveau d'un des dispositifs (par exemple le premier dispositif 100A, figure 1). On notera cependant qu'en présence de deux dispositifs 100A et 100B similaires, c'est-à-dire capables de fonctionner à la fois en mode carte et en mode lecteur, par exemple deux téléphones mobiles, le fonctionnement décrit est similaire pour les deux dispositifs. En particulier, les deux dispositifs en mode veille se trouvent en mode de détection de tag (mode LPTD).

La figure 2 est un chronogramme illustrant un exemple de mise en œuvre d'un procédé de détection, par un dispositif en mode lecteur et en mode veille, par exemple le premier dispositif NFC 100A (figure 1), d'un dispositif en mode carte, par exemple le deuxième dispositif NFC 100B (figure 1). La figure 2 illustre plus particulièrement, de façon très schématique, un exemple d'allure d'évolution, en fonction du temps t (en abscisse), d'une amplitude M (en ordonnée) d'un signal aux bornes du circuit oscillant du dispositif NFC 100A opérant en mode lecteur.

Lorsqu'il est en mode veille, le dispositif NFC 100A, qui cherche à détecter la présence du dispositif NFC 100B à portée, émet périodiquement une salve de champ 200. Cette salve de détection 200 ne comporte généralement qu'une porteuse, typiquement à 13,56 MHz, sans modulation. Chaque salve d'émission inclut donc un train d'impulsions à la fréquence de 13,56 MHz. Chaque salve présente une durée relativement courte par rapport à un intervalle entre deux salves, de préférence dans un rapport d'au moins cent. L'intervalle entre deux salves dépend des dispositifs, mais est généralement de quelques centaines de millisecondes, par exemple, la fréquence des salves en mode LPDC est de l'ordre de quelques hertz, par exemple de l'ordre de 3 ou 4 Hz. La durée d'une salve 200 est de l'ordre de la dizaine ou de la centaine de microsecondes, par exemple de l'ordre de 30 microsecondes.

À titre d'exemple, le dispositif 100A sort du mode veille temporairement et périodiquement pour émettre les salves 200. En général, on préfère toutefois utiliser une machine d'états pour l'émission de salves en mode basse consommation. Cela évite de réveiller un microcontrôleur du dispositif 100A et permet ainsi de rester en mode veille.

Quand le dispositif 100B se trouve dans le champ et modifie la charge du circuit oscillant du dispositif émetteur 100A, cela se traduit par une variation d'une grandeur caractéristique d'un signal aux bornes du circuit oscillant lors d'une salve 200' correspondante. En pratique, la modification de la charge du circuit oscillant du dispositif émetteur 100A se traduit par une variation d'amplitude et/ou de phase du signal aux bornes du circuit oscillant lors de la salve 200'.

Les variations d'amplitude et/ou de phase sont détectées par des variations de signaux en phase (I) et en quadrature de phase (Q) fournis par un détecteur en bande de base mesurant le signal aux bornes du circuit oscillant. Ces signaux I et Q représentent des grandeurs caractéristiques du signal aux bornes du circuit oscillant. Pour illustrer le fonctionnement, on se contente, dans les figures 2 et 3, qui suivent d'exprimer une variation d'amplitude aux bornes du circuit oscillant. Toutefois, les détections illustrées sont en pratique effectuées sur la base des signaux en phase (I) et en quadrature de phase (Q) et de leurs amplitudes respectives.

Dans l'exemple de la figure 2, on suppose arbitrairement que la présence du dispositif 100B provoque une baisse d'amplitude (salve 200'). Toutefois, la présence du dispositif 100B peut, selon les cas, également se traduire par une augmentation de l'amplitude. Il en est de même pour le déphasage par rapport au signal émis.

Dans l'exemple représenté en figure 2, si la variation d'amplitude M est suffisante pour sortir d'une fenêtre ou plage MW d'amplitudes, délimitée par un seuil inférieur THL (ou seuil bas) et par un seuil supérieur THH (ou seuil haut), ou pour sortir d'une plage ou fenêtre de phases non représentée, notée PW, le dispositif émetteur 100A est activé (quitte le mode basse consommation). Il se met à émettre le champ avec des trames 202 d'interrogation (polling, en anglais) d'une communication. Ces trames sont normalisées (elles répondent aux spécifications techniques du NFC Forum) et sont fonction de protocoles de communication supportés par le lecteur 100A (typiquement des requêtes A, B, F, V telles que décrites dans la boucle d'interrogation standard de la norme NFC Forum). La durée d'émission d'une trame est généralement de l'ordre de quelques millisecondes à quelques dizaines de millisecondes.

Si un dispositif configuré en mode carte, par exemple, le dispositif récepteur 100B (en mode carte), est bien présent, ce dispositif répond alors selon la requête du protocole qu'il supporte et la communication démarre. Lorsque la communication est terminée, ou lorsque le dispositif récepteur 100B sort du champ, le dispositif émetteur 100A repasse en mode basse consommation au bout d'un certain temps (de l'ordre de la seconde) afin de réduire sa consommation. Il se remet alors à émettre périodiquement des salves 200 de détection sans requête de communication.

En revanche, si aucun dispositif configuré en mode carte n'est présent, à portée, au moment où le dispositif 100A est activé après avoir considéré qu'il a détecté une carte, la communication ne peut pas s'établir. Le dispositif émetteur 100A repasse, par exemple, en mode basse consommation au bout d'un certain temps (de l'ordre de la seconde) afin de réduire sa consommation énergétique. Il se remet alors à émettre périodiquement des salves 200 de détection sans requête de communication.

De préférence, on prévoit que le dispositif émetteur 100A ne soit pas sorti du mode basse consommation dès le premier franchissement d'un seuil d'amplitude et/ou d'un seuil de phase comme illustré en figure 2, mais à l'issue d'une phase de confirmation comportant plusieurs salves rapprochées.

La figure 3 est un chronogramme illustrant un tel exemple de mise en œuvre d'un procédé de détection. La figure 3 illustre, de façon très schématique, un exemple d'allure d'évolution, en fonction du temps t (en abscisse), d'une amplitude M (en ordonnée) d'un signal aux bornes du circuit oscillant du dispositif NFC 100A opérant en mode lecteur.

Le procédé de la figure 3 comprend des étapes semblables à celles du procédé de la figure 2. Ces étapes semblables ne seront pas décrites à nouveau ci-après.

Selon le procédé illustré par la figure 3, on prévoit que la machine d'états, en charge de l'émission des salves périodiques 200, entre dans un mode 250 de confirmation lorsque l'amplitude et/ou la phase de l'une des salves 200 (par exemple, la salve 200') sort pour la première fois de la fenêtre MW et/ou de la fenêtre PW. Dans le mode 250 de confirmation, la machine d'états émet, par exemple, plusieurs salves 252 d'émission de champ, par exemple huit ou dix salves 252 d'émission de champ.

Les salves 252 sont émises par le dispositif 100A à une fréquence supérieure à la fréquence d'émission des salves 200. À titre d'exemple, les salves 252 sont émises toutes les 1 ms environ, soit à une fréquence d'environ 1 kHz, contre environ 3 à 4 Hz pour les salves 200. En pratique, on prévoit d'estimer une amplitude moyenne et une phase moyenne des salves 252 émises au cours du mode 250 de confirmation.

Dans l'exemple représenté en figure 3, l'amplitude moyenne des salves 252 ne sort pas de la fenêtre MW. On considère alors, à l'issue du mode de confirmation 250, que le dispositif NFC 100A a commis une erreur de détection, par exemple que la salve 200' n'était probablement pas due à la présence d'une carte à portée mais à une perturbation. Le dispositif NFC 100A est alors maintenu en mode basse consommation, et la machine d'états se remet à émettre, périodiquement, des salves 200. Par rapport à l'exemple de la figure 2, cela permet ainsi d'éviter une sortie de veille intempestive du dispositif NFC 100A causée par la salve 200'.

En d'autres termes, par rapport à l'exemple illustré en figure 2, cela revient lorsque l'on détecte la sortie de la fenêtre d'amplitude ou de phase, à débuter l'émission 202 à l'issue du mode de confirmation 250, et non pas directement après la salve 200'.

On a déjà proposé d'ajuster périodiquement les seuils de détection pour tenir compte de perturbations environnementales, notamment la température, des circuits électroniques opérant la détection.

Par exemple, le document EP 3495986 (B16716 - 17-RO-0771) décrit une adaptation des fenêtres de seuils en fonction de l'évolution de la température ou autres perturbations.

Selon un autre exemple, le document EP 3896864 (B19625 - 19-RO-0982) décrit la prévision de phases de confirmation par l'émission de salves de détections rapprochées ainsi qu'un ajustement de la plage d'amplitude ou de phase des fenêtres de détection (l'écart entre les seuils).

L'ajustement des fenêtres de détection en fonction de l'évolution de la température combinée à la prévision de phases de confirmation fournit de bons résultats. Cependant, il peut se produire que de brusques variations de température, provoquent des erreurs de détection et la sortie du mode basse consommation LPTD des circuits NFC. En effet, l'ajustement des fenêtres de seuils de détection telle que décrite dans le document EP 3495986 tient compte des résultats obtenus au cours de salves précédant la salve courante (moyenne glissante) et tient donc compte d'une évolution relativement lente de la température.

Or, il n'est pas rare que d'autres circuits équipant un dispositif (par exemple, un téléphone mobile) soient activés, provoquant ainsi un échauffement brusque des circuits de détection. Cet échauffement brusque est d'autant plus présent que les circuits dédiés à d'autres fonctions sont proches des circuits NFC.

Même si, dans ce cas, la surconsommation ne se produit que pendant des phases d'interrogation (polling) car aucun dispositif NFC ne répond (le franchissement du seuil est lié à un échauffement), il est préférable d'éviter ces phases inutiles de surconsommation. En effet, l'émission de champ en phase d'interrogation engendre une consommation de l'ordre de 30-40 milliampères en moyenne pendant de l'ordre de 1 à 3 secondes en fonction de la durée des phases d'interrogation (typiquement, des trames d'interrogations consommant de l'ordre de 300 milliampères sont émises deux fois par seconde et durent environ 60 millisecondes chacune lorsque toutes les technologies sont actives (A, B, F et V)), à comparer à une consommation en mode LPTD de l'ordre de 100 microampères en moyenne (typiquement des salves consommant de l'ordre de 250 milliampères sont émises 3-4 fois par seconde et durent chacune environ 30 microsecondes).

Bien qu'il ne soit pas exclu qu'elles se produisent également en cas de refroidissement brusque, les sorties de veille intempestives se produisent essentiellement par suite d'un échauffement brusque provoqué par l'activation d'un circuit électronique autre que NFC. En effet le refroidissement interne par suite d'une désactivation ou du passage en mode de veille est généralement plus lent et est compatible avec le temps de réponse des procédés d'adaptation des fenêtres de seuils. Typiquement, pour satisfaire aux autres besoins d'adaptation des seuils et notamment prendre en compte le refroidissement des circuits NFC à la suite d'une mise en veille, on prévoit un temps de réponse prenant en compte des variations de température lentes, c'est-à-dire inférieures à 2°C par seconde. Or, une augmentation de température par suite de l'activation d'un circuit électronique à proximité du circuit ou routeur NFC peut atteindre 5°C par seconde et est fréquemment de l'ordre de 3°C par seconde. Les seuils de détection sont alors franchis.

Les modes de réalisation décrits prévoient, en cas de détection d'un franchissement d'un seuil de détection, de valider ou invalider cette détection en prenant en compte la vitesse de variation (le gradient) de la température de l'environnement du circuit.

On peut prévoir d'adjoindre un capteur de température aux circuits NFC mais cela n'est le plus souvent pas nécessaire car un détecteur de température est déjà disponible dans la plupart des circuits.

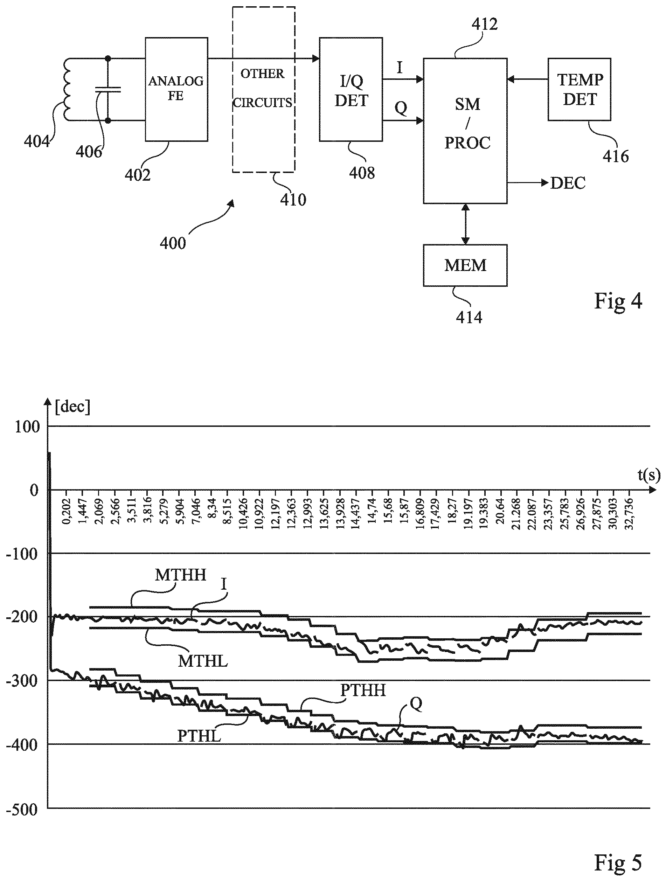

La figure 4 représente, de façon schématique et sous forme de blocs, un mode de réalisation de circuits 400 de communication en champ proche. Cette figure ne représente pas tous les constituants d'un circuit NFC mais seulement certains des éléments utiles à la compréhension des modes de réalisation décrits. En particulier, on se ne préoccupe pour simplifier que de la réception par détection de variation d'amplitude et de phase du signal aux bornes du circuit oscillant.

Parmi les éléments représentés, en eux-mêmes usuel dans un circuit ou routeur NFC, on retrouve :
des circuits analogiques 402 (ANALOG FE), reliés à une antenne 404 constituant, avec un ou plusieurs éléments capacitifs 406 internes ou externes aux circuits 402, le circuit oscillant du dispositif NFC, les circuits 402 incluant divers circuits d'adaptation d'impédance, de mise en forme, d'amplification etc. ;
un détecteur de signaux en bande de base 408 (I/Q DET) relié, par l'intermédiaire d'autres circuits 410 (OTHER CIRCUITS) de conversion analogique-numérique, de mise en forme, de démodulation, etc., aux circuits analogiques 402, le détecteur 408 fournissant des signaux en phase I et en quadrature de phase Q représentatifs de l'amplitude M et de la phase P du signal aux bornes du circuit oscillant ;
une machine d'états 412 (SM / PROC) ou un processeur d'interprétation des valeurs des signaux I et Q fournis par le détecteur 408 et fournissant, entre autres, un signal DET (typiquement 0/1) indicateur du résultat de la détection.

La machine d'états ou le processeur 412 est associé (relié) à au moins une mémoire 414. De préférence, plusieurs mémoires (au moins une mémoire volatile ou des registres et au moins une mémoire non volatile) sont utilisées pour stocker les différentes grandeurs utiles à la mise en œuvre du procédé de détection et notamment les seuils de détection et des valeurs de température.

La machine d'états ou le processeur reçoit également, entre autres, une information représentative de la température, fournie par un détecteur de température 416 (TEMP DET). Le détecteur 416 est, de préférence intégré au circuit NFC 400 ou placé à proximité de ce dernier afin de prendre en compte une température représentative du circuit 400 ou de son environnement proche.

D'autres éléments et circuits usuels équipent bien entendu le circuit 400. En particulier, on ne se préoccupe ici que du signal DET indicateur d'un besoin de sortie du mode veille (LPTD) pour basculer en mode d'interrogation (polling).

La figure 5 illustre, par des chronogrammes, le fonctionnement du circuit 400 en présence de variations relativement lentes de température, c'est-à-dire des variations acceptables devant la constante de temps d'évolution des fenêtres de seuils d'amplitude et de phase.

Plus particulièrement, la figure 5 représente des exemples d'allures respectives, en fonction du temps :
du signal I représentatif de l'amplitude du signal aux bornes du circuit oscillant ;
du signal Q représentatif de la phase du signal aux bornes du circuit oscillant ;
des niveaux des seuils d'amplitude MTHH et MTHL définissant, pour le signal I, la fenêtre de maintien en mode LPTD ; et
des niveaux des seuil de phase PTHH et PTHL définissant, pour le signal Q, la fenêtre de maintien en mode LPTD.

Les amplitudes ou valeurs des signaux I et Q sont exprimées en valeurs numériques (dans cet exemple de -512 à 511 [dec]) en raison de la conversion analogique-numérique (ici par exemple sur 10 bits) opérée en sortie des mélangeurs fournissant les signaux I et Q.

On considère, en figure 5, un cas dans lequel aucun dispositif NFC est à portée du dispositif émettant les salves de détection. Par conséquent, les signaux I et Q restent à l'intérieur des fenêtres de détection ou n'en sortent que pendant une durée inférieure à la durée de la phase de confirmation 250 (figure 3).

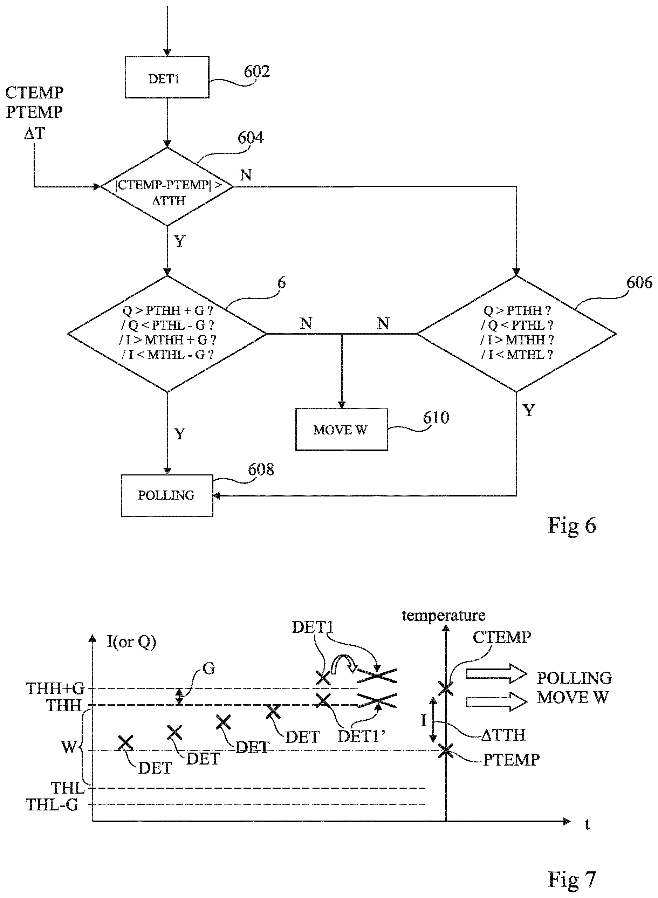

La figure 6 représente, de façon très schématique et sous forme de blocs, un mode de réalisation du procédé de validation de sortie du mode LPTD en fonction du gradient temporel de température.

L'évolution des seuils de détection MTHH, MTHL, PTHH et PTHL est toujours effectuée par la prise en compte des mesures antérieures comme dans les procédés illustrés par les figures 2 et 3.

Selon le mode de réalisation de la figure 6, on prévoit, en cas de détection d'un franchissement d'un des seuils MTHH, MTHL, PTHH et PTHL, de valider ou non la détection en comparant la valeur I ou Q obtenue (ayant franchi un seuil) à une fenêtre de seuils ajustée en fonction de la vitesse de variation de la température. Plus précisément, on définit un seuil de différence (delta) de température par rapport à la mesure de température précédente et si la température a varié de plus de ce seuil de différence, on élargit la fenêtre de détection d'une marge définie.

Selon ce mode de réalisation, la température est mesurée périodiquement par le détecteur 416 (figure 4) et est stockée dans la mémoire 414. De préférence, on mesure la température à chaque salve de détection. Dans ce cas, on peut ne mémoriser que la dernière valeur de température et écraser la valeur précédente. C'est en effet suffisant pour obtenir le gradient de variation de la température entre deux mesures. En variante, on compare la température courante à une valeur moyenne de la température mesurée lors de plusieurs salves précédentes.

Par exemple, à la détection du franchissement d'un des seuils de détection (bloc 602, DET1) par une des valeurs I ou Q ou les deux, on calcule la différence entre la température courante CTEMP et la température mesurée et stockée lors de la salve précédente PTEMP (en variante, moyennée sur plusieurs salves), et on vérifie (bloc 604, |CTEMP-PTEMP| > ΔTTH ?) si cette différence excède, en valeur absolue, une différence de température prédéterminée ΔTTH. Selon un autre exemple, la température est mesurée pendant chaque phase de calibration des seuils (mise en œuvre en l'absence de détection d'un dispositif dans le champ, par exemple comme cela est décrit dans le document EP 3495986) ainsi que, de préférence, à la suite d'une détection 602 remontée par la machine d'états. Par exemple, on mesure la température lors de la détection 602 et, lors du test 604, on la compare avec celle mesurée lors de la calibration si c'est la première détection 602 ou lors de la détection précédente lorsqu'il s'agit d'une nième détection 602.

Si le test 604 indique que la variation de température est inférieure au seuil (sortie N du bloc 604), cela signifie que l'on est, a priori, en présence d'un deuxième dispositif. Selon un mode de réalisation simplifié, on valide le franchissement du seuil par la grandeur I ou Q ayant provoqué le déclenchement du processus de validation et on sort alors du mode de détection basse consommation et on passe en mode d'interrogation. De préférence, on effectue, comme cela est représenté, un nouveau test (bloc 606, Q > PTHH ? / Q < PTHL ? / I > MTHH ? / I < MTHL ?) par rapport aux fenêtres de détection courantes. Si ce deuxième test confirme le premier ayant provoqué le passage en phase de validation (sortie Y du bloc 606), on sort alors du mode de détection basse consommation et on passe en mode d'interrogation (bloc 608, POLLING). Dans le cas contraire (sortie Y du bloc 606), le dispositif reste en mode de détection LPTD. Cependant, pour tenir compte de l'augmentation de la température, le cas échéant plus rapidement que la boucle de calibration prenant en compte l'évolution de la valeur I ou Q correspondante, on recentre la fenêtre W de seuils considérée sur la valeur courante I ou Q (bloc 610, MOVE W).

Si le gradient de température ΔT est supérieur au seuil ΔTTH (sortie Y du bloc 604), on compare (bloc 612, Q > PTHH+G ? / Q < PTHL-G ? / I > MTHH+G ? / I < MTHL-G ?) la ou les valeurs I, Q, ayant provoqué le déclenchement du processus de validation à un seuil augmenté (en valeur absolue) d'une marge G. Cela revient à agrandir la fenêtre de seuils considérée d'une amplitude 2G.

Si le seuil corrigé n'est pas franchi par la valeur ayant provoqué le déclenchement du processus de validation (sortie N du bloc 612), on recentre la fenêtre W de seuils considérée sur la valeur courante I ou Q (bloc 610, MOVE W) et le dispositif reste en mode LPTD.

Si le seuil corrigé est franchi par la valeur ayant provoqué le déclenchement du processus de validation (sortie Y du bloc 612), cela signifie que l'on est bien, a priori (à confirmer par la phase d'interrogation), en présence d'un autre dispositif NFC dans le champ. On sort alors du mode de détection basse consommation et on passe en mode d'interrogation (bloc 608, POLLING).

La figure 7 illustre, par des chronogrammes, le fonctionnement du mode de réalisation de la figure 6. Plus particulièrement, la figure 7 illustre des exemples de valeurs DET de I ou de Q (I (or Q)) prises au cours de salves de détection et deux exemples DET1 et DET1' de franchissement de la fenêtre courante conduisant, pour l'un (DET1), à un maintien en mode LPTD et, pour l'autre (DET1), au passage en mode d'interrogation.

La valeur du seuil ΔTTH dépend de l'application et plus particulièrement de l'environnement thermique du circuit NFC. Cette valeur est, par exemple, déterminée, lors de la conception du dispositif NFC en fonction de la nature des circuits électroniques à proximité du circuit NFC. Par exemple, elle est déterminée par simulation ou à partir de mesures permettant de vérifier le comportement du circuit NFC à des variations brusques de température. Selon un autre exemple, cette valeur ΔTTH est paramétrable afin de permettre à un fabricant de dispositifs NFC intégrant un circuit NFC d'ajuster cette valeur en fonction de son produit.

A titre d'exemple particulier de réalisation, le seuil ΔTTH est compris entre 2 et 5°C, de préférence de l'ordre de 3°C.

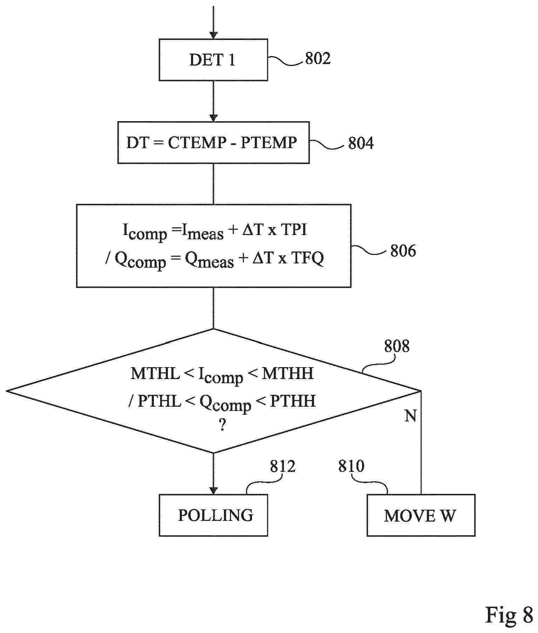

La figure 8 représente, de façon très schématique et sous forme de bloc, un autre mode de réalisation du procédé de validation de sortie du mode LPTD en fonction du gradient de température.

L'évolution des seuils de détection MTHH, MTHL, PTHH et PTHL est, là encore, toujours effectuée par la prise en compte des mesures antérieures comme dans les procédés illustrés par les figures 2 et 3.

Selon le mode de réalisation de la figure 8, on prévoit, en cas de détection d'un franchissement d'un des seuils MTHH, MTHL, PTHH et PTHL, par la valeur I et/ou Q, de valider ou non la détection en effectuant de nouveau la comparaison mais sur la base de valeurs I et Q compensées en fonction du gradient temporel de température. Par rapport au mode de réalisation de la figure 6, on n'agit pas sur les seuils mais sur les valeurs mesurées.

Comme dans le cas de la figure 6, on définit une différence (delta) entre la température courante et la mesure de température précédente. On affecte alors cette différence d'un coefficient de pondération, de préférence différent pour la voie I et pour la voie Q, et on additionne le résultat à la valeur de I et/ou Q mesurée pour réeffectuer la comparaison par rapport aux seuils.

De même, la température est mesurée périodiquement par le détecteur 416 (figure 4) et est stockée dans la mémoire 414. De préférence, on mesure la température à chaque salve de détection. On peut ne mémoriser que la dernière valeur de température et écraser la valeur précédente. C'est en effet suffisant pour obtenir le gradient de variation de la température entre deux mesures. En variante, on compare la température courante une valeur moyenne de la température mesurée lors de plusieurs salves précédentes.

Par exemple, à la détection du franchissement d'un des seuils de détection (bloc 802, DET1) par une des valeurs I ou Q ou les deux, on calcule (bloc 804, ΔT = CTEMP-PTEMP) la différence ΔT entre la température courante CTEMP et la température mesurée et stockée lors de la salve précédente PTEMP (en variante, moyennée sur plusieurs salves).

Puis (bloc 806, Icomp = Imeas+ ΔTxTFI / Qcomp = Qmeas+ΔTxTFQ), on calcule une valeur Icomp et/ou Qcomp (selon la valeur I et/ou Q qui a provoqué le déclenchement du processus de validation) compensée en température en ajoutant, à la valeur mesurée Imeas et/ou Qmeas, la valeur de la différence de température ΔT pondérée par un coefficient TFI ou TFQ, de préférence différent pour la voie Q et pour la voie I.

On effectue ensuite de nouveau (bloc 808, MTHL < Icomp < MTHH / PTHL < Qcomp < PTHH ?) la comparaison par rapport aux seuils définissant la ou les fenêtres de valeurs d'amplitude et/ou de phase.

Si la valeur compensée en température reste dans la fenêtre de seuils (sortie N du bloc 808), cela signifie que l'on est en présence d'un échauffement et non en présence d'un autre dispositif NFC dans le champ. On reste donc en mode détection basse consommation LPTD. De préférence, pour tenir compte de l'augmentation de la température plus rapidement que la boucle de calibration prenant en compte l'évolution de la valeur I ou Q correspondante, on recentre la fenêtre W de seuils considérée sur la valeur courante Imeas ou Qmeas (bloc 810, MOVE W).

Si la valeur compensée en température sort de la fenêtre de seuils (sortie Y du bloc 812), cela signifie que l'on est bien, a priori (à confirmer par la phase d'interrogation) en présence d'un autre dispositif NFC dans le champ. On sort alors du mode de détection basse consommation et on passe en mode d'interrogation (bloc 810, POLLING).

Les valeurs des coefficients de pondération dépendent de l'application et plus particulièrement de l'environnement thermique du circuit NFC. Ces valeurs sont, par exemple, déterminées, lors de la conception du dispositif NFC en fonction de la nature des circuits électroniques à proximité du circuit NFC. Par exemple, ils sont déterminés par simulation ou à partir de mesures permettant de vérifier le comportement du circuit NFC à des variations brusques de température. Selon un autre exemple, ces valeurs TFI et TFQ sont paramétrables afin de permettre à un fabricant de dispositifs NFC intégrant un circuit NFC d'ajuster ces coefficients en fonction de son produit.

A titre d'exemple particulier de réalisation, le coefficient TFI est compris entre 10 et 50 (/°C), de préférence de l'ordre de 30 par degré C. Toujours à titre d'exemple particulier de réalisation, le coefficient TFQ est compris entre -2 et -10 (/°C), de préférence égal à -4 par degré C.

Bien qu'il soit possible de mettre en œuvre le processus de validation, que ce soit selon l'un ou l'autre des modes de réalisation, dans un procédé de détection du type de celui illustré par la figure 2, c'est-à-dire dès qu'un seuil est franchi, on préfère ne le mettre en œuvre que lorsque ce franchissement intervient dans une phase de confirmation telle qu'illustré par le mode de réalisation de la figure 3. Cela permet de réduire le besoin de mettre en œuvre le processus de validation.

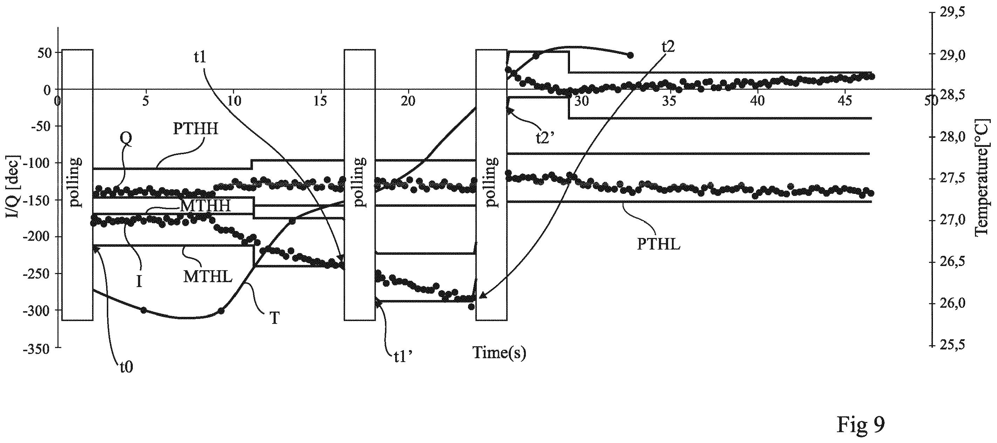

La figure 9 illustre, par des chronogrammes, un exemple de fonctionnement d'un procédé de détection sous l'effet d'une variation brusque de température, sans mise en œuvre du procédé de validation.

Cette figure représente des exemples d'allures des grandeurs I, Q, des seuils MTHH, MTHL, PTHH, PTHH, ainsi qu'un exemple d'allure de la température T.

On suppose qu'à un instant t0, on quitte une phase d'interrogation (Polling) pour passer en mode de détection LPTD.

Les fenêtres de seuils évoluent en prenant en compte, de façon lissée, les variations de température, c'est-à-dire relativement lentement.

On suppose qu'à un instant t1, la brusque augmentation de la température T provoque le franchissement du seuil MTHL par une salve de détection. Il en découle le déclenchement d'une nouvelle phase d'interrogation (polling). Comme ce déclenchement est sous l'effet de la température, la phase d'interrogation ne dure que de l'ordre d'une à deux secondes et, à un instant t1', on repasse en mode LPTD. La fenêtre de seuils d'amplitude a continué à baisser en amplitude par la prise en compte de la diminution initiale de la température (provoquée par le refroidissement lié à l'arrêt à l'instant t0 de la première phase d'interrogation).

Comme la température continue à croitre après l'instant t1', on se retrouve rapidement (instant t2) à redéclencher une nouvelle phase d'interrogation suite à un nouveau franchissement du seuil MTHL. Cette phase provoquée par l'augmentation de la température ne dure, là encore, qu'une à deux secondes et, à un instant t2', on repasse en mode LPTD.

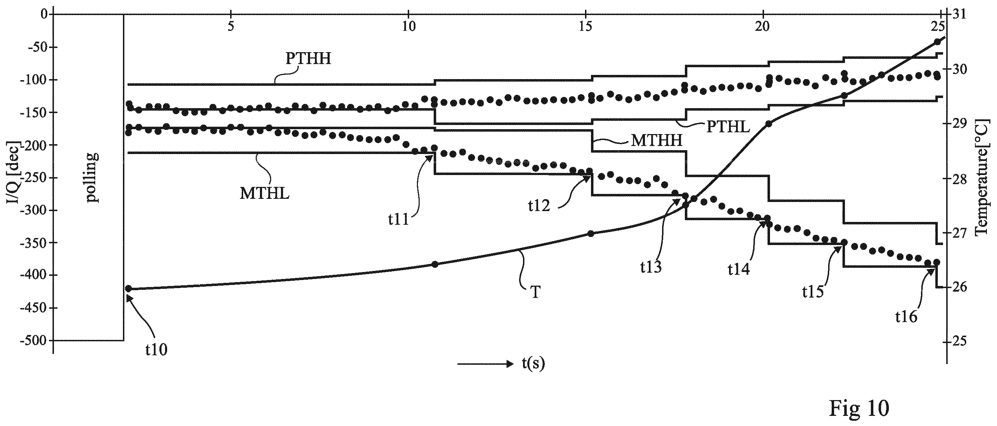

La figure 10 illustre, par des chronogrammes, un exemple de fonctionnement d'un procédé de détection sous l'effet d'une variation brusque de température, avec mise en œuvre du procédé de validation décrit en relation avec la figure 8.

Cette figure représente des exemples d'allures des grandeurs I, Q, des seuils MTHH, MTHL, PTHH, PTHH, ainsi qu'un exemple d'allure de la température T, à mettre en relation avec l'exemple de la figure 9.

On suppose qu'à un instant t10, on quitte une phase d'interrogation (Polling) pour passer en mode de détection LPTD.

Par rapport au cas de la figure 9, on voit qu'ici, sous le double effet de la seconde comparaison sur la base de valeurs compensées en température et de l'ajustement de la fenêtre de seuil à chaque fois (instants t11, t12, t13, t14, t15, t16) qu'est effectuée cette seconde comparaison, on ne passe pas en mode d'interrogation malgré l'augmentation de la température.

Un avantage du procédé décrit est qu'il permet d'éviter les faux déclenchements du mode d'interrogation, en particulier par suite de l'activation d'un autre circuit du dispositif que le circuit NFC.

Un autre avantage du procédé décrit est qu'il est compatible avec une mise en œuvre logicielle (par un programme exécuté par un processeur associé à un support de stockage non transitoire, par exemple un mémoire non volatile, comprenant des instructions adaptées à la mise en œuvre du procédé décrit) ainsi qu'avec une mise en œuvre matérielle (par une machine d'état programmable ou en logique câblée).

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, bien que les modes de réalisation aient été décrits en relation avec la vitesse de variation de la température, ils se transposent à la prise en compte d'autres paramètres du circuit NFC comme, par exemple, le gradient ou vitesse de variation de la tension d'alimentation.

Enfin, la mise en oeuvre pratique des modes de réalisation et variantes décrits est à la portée de la personne du métier à partir des indications fonctionnelles données ci-dessus.

## Revendications

1. Procédé dans lequel, en cas de détection potentielle, par un premier dispositif NFC (100A), d'un deuxième dispositif NFC (100B), une validation de cette détection est effectuée en fonction du gradient temporel (ΔT) de variation d'au moins une condition environnementale du premier dispositif, le procédé comportant les étapes successives suivantes :
détection du franchissement, par une valeur (Qmeas, Imeas ; Q, I) d'au moins une grandeur caractéristique parmi l'amplitude (I) et la phase (Q), d'un signal aux bornes d'un circuit oscillant (404, 406) du premier dispositif (100A), de premiers seuils de détection (MTHH, MTHL, PTHH, PTHL) ; et **caractérisé en ce que** le procédé comprend également les étapes de
validation de la détection en fonction du résultat d'une comparaison de ladite valeur (Q, I) à des seuils de détection (MTHL G, PTHL G, MTHH+G, PTHH+G) ajustés postérieurement à la détection, en fonction du gradient de variation (ΔT) de la condition environnementale, ou d'une comparaison auxdits seuils de détection (MTHL, PTHL, MTHH, PTHH) d'une valeur (Qcomp, Icomp) compensée postérieurement à la détection, en fonction du gradient (ΔT) de variation de la condition environnementale.

2. Procédé selon la revendication 1, dans lequel la condition environnementale est la température (T).

3. Procédé selon la revendication 1 ou 2, dans lequel les seuils correspondent à des premier (MTHL, PTHL) et deuxième (MTHH, PTHH) seuils délimitant une plage (MW, PW) de valeurs de la grandeur (Q, I) caractéristique.

4. Procédé selon la revendication 3, dans lequel les seuils de détection (MTHL, PTHL, MTHH, PTHH) délimitent une plage de valeurs de ladite grandeur caractéristique (Q, I) sans présence de deuxième dispositif.

5. Procédé selon l'une quelconque des revendications 1 à 4, dans lequel ladite comparaison est effectuée si ledit gradient (ΔT) est supérieur à un gradient seuil (ΔTTH) et la détection potentielle est validée dans le cas contraire.

6. Procédé selon l'une quelconque des revendications 1 à 5, dans lequel les seuils de détection (MTHL, PTHL, MTHH, PTHH) sont ajustés en fonction du résultat de la validation d'une détection potentielle.

7. Procédé selon la revendication 6, dans lequel les seuils de détection (MTHH, MTHL, PTHH, PTHL) sont ajustés en fonction dudit gradient (ΔT) de ladite condition environnementale du premier dispositif.

8. Procédé selon l'une quelconque des revendications 1 à 7, dans lequel ledit gradient (ΔT) correspond à la variation de ladite condition environnementale entre deux phases de détection.

9. Procédé selon l'une quelconque des revendications 1 à 8, dans lequel le premier dispositif (100A) comporte au moins deux modes de fonctionnement, dont un premier mode dans lequel des salves de détection sont espacées d'une durée correspondant à au moins cent fois la durée des salves.

10. Procédé selon l'une quelconque des revendications 1 à 9, dans lequel le premier dispositif (100A) bascule dans un mode de fonctionnement d'émission d'une séquence d'interrogation telle que définie dans les spécifications du NFC Forum lorsque le deuxième dispositif (100B) est détecté à portée.

11. Produit programme d'ordinateur, comportant des instructions adaptées à la mise en œuvre du procédé selon l'une quelconque des revendications 1 à 10.

12. Dispositif électronique (100A), comportant un produit programme d'ordinateur selon la revendication 11.

13. Circuit électronique (400 ; 600 ; 800), comportant une machine d'états ou un processeur (412), configuré pour la mise en œuvre du procédé selon l'une quelconque des revendications 1 à 10.

14. Dispositif électronique (100A), comportant un circuit électronique (400 ; 600 ; 800) selon la revendication 13.

## Patentansprüche

1. Ein Verfahren, wobei im Falle einer potenziellen Detektion, durch ein erstes NFC-Gerät (100A), eines zweiten NFC-Geräts (100B), eine Validierung dieser Detektion durchgeführt wird, entsprechend dem Zeitvariationsgradienten (ΔT) wenigstens einer Umgebungsbedingung des ersten Geräts, wobei das Verfahren die folgenden aufeinanderfolgenden Schritte aufweist:
Detektieren des Überschreitens, um einen Wert (Qmeas, Imeas; Q, I) wenigstens einer charakteristischen Größe aus der Amplitude (I) und der Phase (Q) eines Signals über einen Schwingkreis (404, 406) des ersten Geräts (100A), und zwar von ersten Detektionsschwellenwerten (MTHH, MTHL, PTHH, PTHL); und
**dadurch gekennzeichnet, dass** das Verfahren auch die Schritte der Validierung der Detektion aufweist, entsprechend dem Ergebnis eines Vergleichs des Wertes (Q, I) mit Detektionsschwellenwerten (MTHL G, PTHL G, MTHH+G, PTHH+G), die nach der Detektion angepasst werden, entsprechend dem Variationsgradienten (ΔT) der Umgebungsbedingung, oder eines Vergleichs mit den Detektionsschwellenwerten (MTHL, PTHL, MTHH, PTHH) eines Wertes (Qcomp, Icomp), der nach der Detektion kompensiert wird, entsprechend dem Variationsgradienten (ΔT) der Umgebungsbedingung.

2. Das Verfahren nach Anspruch 1, wobei die Umgebungsbedingung die Temperatur (T) ist.

3. Das Verfahren nach Anspruch 1 oder 2, wobei die Schwellenwerte ersten (MTHL, PTHL) und zweiten (MTHH, PTHH) Schwellenwerten entsprechen, die einen Bereich (MW, PW) von Werten der charakteristischen Größe (Q, I) begrenzen.

4. Das Verfahren nach Anspruch 3, wobei die Detektionsschwellenwerte (MTHL, PTHL, MTHH, PTHH) einen Bereich von Werten der charakteristischen Größe (Q, I) ohne das Vorhandensein eines zweiten Geräts begrenzen.

5. Das Verfahren nach einem der Ansprüche 1 bis 4, wobei der Vergleich durchgeführt wird, wenn der Gradient (ΔT) größer als ein Schwellenwertgradient (ΔTTH) ist, und die potentielle Detektion im gegenteiligen Fall validiert wird.

6. Das Verfahren nach einem der Ansprüche 1 bis 5, wobei die Detektionsschwellenwerte (MTHL, PTHL, MTHH, PTHH) angepasst werden, entsprechend dem Ergebnis der Validierung einer potenziellen Detektion.

7. Das Verfahren nach Anspruch 6, wobei die Detektionsschwellenwerte (MTHH, MTHL, PTHH, PTHL) angepasst werden entsprechend dem Gradienten (ΔT) der Umgebungsbedingung des ersten Geräts.

8. Das Verfahren nach einem der Ansprüche 1 bis 7, wobei der Gradient (ΔT) der Variation der Umgebungsbedingung zwischen zwei Detektionsphasen entspricht.

9. Das Verfahren nach einem der Ansprüche 1 bis 8, wobei das erste Gerät (100A) wenigstens zwei Betriebsmodi aufweist, darunter einen ersten Modus, in dem Detektionsbursts um eine Dauer voneinander beabstandet sind, die wenigstens dem Hundertfachen der Dauer der Bursts entspricht.

10. Das Verfahren nach einem der Ansprüche 1 bis 9, wobei das erste Gerät (100A) in einen Betriebsmodus zur Übertragung einer Abfragefolge wechselt, wie sie in den NFC-Forum-Spezifikationen definiert ist, wenn das zweite Gerät (100B) innerhalb der Reichweite detektiert wird.

11. Ein Computerprogrammprodukt, das Anweisungen aufweist, die eingerichtet sind zum Implementieren des Verfahrens nach einem der Ansprüche 1 bis 10.

12. Ein elektronisches Gerät (100A), das ein Computerprogrammprodukt nach Anspruch 11 aufweist.

13. Eine elektronische Schaltung (400; 600; 800), aufweisend eine Zustandsmaschine oder einen Prozessor (412), eingerichtet zum Implementieren des Verfahrens nach einem der Ansprüche 1 bis 10.

14. Ein elektronisches Gerät (100A), aufweisend eine elektronische Schaltung (400; 600; 800) nach Anspruch 13.

## Claims

1. Method wherein, in case of a potential detection, by a first NFC device (100A), of a second NFC device (100B), a validation of this detection is performed according to the time variation gradient (ΔT) of at least one environmental condition of the first device, the method comprising the following successive steps:
detection of the exceeding, by a value (Qmeas, Imeas; Q, I) of at least one characteristic quantity from among the amplitude (I) and the phase (Q) of a signal across an oscillating circuit (404, 406) of the first device (100A), of first detection thresholds (MTHH, MTHL, PTHH, PTHL); and
**characterized in that** the method also comprises the steps of validation of the detection according to the result of a comparison of said value (Q, I) with detection thresholds (MTHL G, PTHL G, MTHH+G, PTHH+G) adjusted subsequently to the detection, according to the variation gradient (ΔT) of the environmental condition, or of a comparison with said detection thresholds (MTHL, PTHL, MTHH, PTHH) of a value (Qcomp, Icomp) compensated subsequently to the detection, according to the variation gradient (ΔT) of the environmental condition.

2. Method according to claim 1, wherein the environmental condition is temperature (T).

3. Method according to claim 1 or 2, wherein the thresholds correspond to first (MTHL, PTHL) and second (MTHH, PTHH) thresholds delimiting a range (MW, PW) of values of the characteristic quantity (Q, I).

4. Method according to claim 3, wherein the detection thresholds (MTHL, PTHL, MTHH, PTHH) delimit a range of values of said characteristic quantity (Q, I) without the presence of a second device.

5. Method according to any of claims 1 to 4, wherein said comparison is performed if said gradient (ΔT) is greater than a threshold gradient (ΔTTH) and the potential detection is validated in the opposite case.

6. Method according to any of claims 1 to 5, wherein the detection thresholds (MTHL, PTHL, MTHH, PTHH) are adjusted according to the result of the validation of a potential detection.

7. Method according to claim 6, wherein the detection thresholds (MTHH, MTHL, PTHH, PTHL) are adjusted according to said gradient (ΔT) of said environmental condition of the first device.

8. Method according to any of claims 1 to 7, wherein said gradient (ΔT) corresponds to the variation of said environmental condition between two detection phases.

9. Method of any of claims 1 to 8, wherein the first device (100A) comprises at least two operating modes, among which a first mode in which detection bursts are spaced apart by a duration corresponding to at least one hundred times the duration of the bursts.

10. Method according to any of claims 1 to 9, wherein the first device (100A) switches to an operating mode of transmission of a polling sequence such as defined in the NFC Forum specifications when the second device (100B) is detected within range.

11. Computer program product comprising instructions adapted to the implementation of the method according to any of claims 1 to 10.

12. Electronic device (100A), comprising a computer program product according to claim 11.

13. Electronic circuit (400; 600; 800), comprising a state machine or a processor (412), configured for the implementation of the method according to any of claims 1 to 10.

14. Electronic device (100A), comprising an electronic circuit (400; 600; 800) according to claim 13.
